Europäisches Patentamt

European Patent Office

Office européen des brevets

(19)

(11) **EP 1 293 854 B1**

(12) **FASCICULE DE BREVET EUROPEEN**

(45) Date de publication et mention
de la délivrance du brevet:
**21.12.2005 Bulletin 2005/51**

(51) Int Cl.7: **G05D 13/62**, G05D 7/06

(21) Numéro de dépôt: **02291687.8**

(22) Date de dépôt: **05.07.2002**

(54) **Système de régulation du régime d'un moteur d'un hélicoptère**

Motorgeschwindigkeitsregelsystem eines Hubschraubers

System for controlling a helicopter's engine speed

(84) Etats contractants désignés:
**GB IT**

(30) Priorité: **19.07.2001 FR 0109644**

(43) Date de publication de la demande:
**19.03.2003 Bulletin 2003/12**

(73) Titulaire: **EUROCOPTER**
**13725 Marignane Cédex (FR)**

(72) Inventeur: **Certain, Bernard**
**13090 Aix en Provene (FR)**

(74) Mandataire: **Renaud-Goud, Thierry et al**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
**FR-A- 2 803 051**      **US-A- 4 423 593**

• CLAVEAU ET AL: "ADVANCED FUEL CONTROL
SYSTEM FOR TURBOSHAFT ENGINES" ,
ANNUAL FORUM OF THE AMERICAN
HELICOPTER SOCIETY, XX, XX, VOL. 2,
PAGE(S) 1644-1651 XP008000144 * le document
en entier *

## Description

La présente invention concerne un système de régulation du régime d'au moins un moteur d'un hélicoptère.

On sait que le système de commande d'un moteur contrôle la quantité de carburant qui est injectée dans la chambre de combustion de ce moteur, dans les différentes configurations de fonctionnement suivantes de l'hélicoptère : démarrage, vol, arrêt du moteur. A cet effet, deux commandes mécaniques agissent sur le moteur, à savoir :

- une commande de débit qui est actionnée par le pilote (manette de débit) ; et
- une commande de compensation de la régulation du moteur. Cette dernière commande, qui est couplée à la commande de pas collectif, est automatique.

Le pilote ne dispose donc que d'une seule commande directe, la manette de débit, qui ne sert d'ailleurs que lors des phases de mise en route, d'arrêt et lors de l'accélération du moteur jusqu'au régime régulé (manette de débit sur la position "vol"). Sur les hélicoptères équipés d'un calculateur moteur, ces phases sont contrôlées automatiquement par le calculateur : la manette de débit devient alors inutile.

Lorsque la manette de débit est mise sur la position "vol", le pilote n'a plus à commander le débit, car le moteur est alors pris en charge par un système de régulation qui dose automatiquement le carburant en fonction de la puissance demandée par le rotor (fonction du pas collectif) et maintient, constante, la vitesse de rotation de la turbine libre du moteur. La commande de la régulation agit sur le régulateur de turbine libre. Intervenant automatiquement sur variation du pas collectif, elle :

- compense partiellement le statisme du régulateur centrifuge, c'est-à-dire conserve un régime rotor NR sensiblement constant, quel que soit le débit de carburant, donc quelle que soit la puissance demandée ; et
- procure un temps de réponse très court, évitant le pompage lors des brusques accélérations et l'extinction lors des brusques décélérations.

Pour cette raison, on appelle aussi cette commande "anticipateur", car elle va au-devant de la réaction normale du régulateur centrifuge.

Pour ce faire, le système de régulation du régime du moteur comporte, de façon connue par le brevet US 4, 423, 593 :

- au moins un doseur pour doser le carburant qui est fourni au moteur, en fonction d'ordres de commande ;

- un moyen pour mesurer un régime NTL correspondant au régime de rotation de la turbine libre dudit moteur ;
- un moyen pour mesurer un régime NG correspondant au régime du générateur de gaz dudit moteur ;
- un dispositif pour déterminer une valeur de consigne NTLcons correspondant à la valeur de consigne du régime de rotation de la turbine libre du moteur. Ce dispositif est généralement un potentiomètre réglable qui délivre une valeur constante. Cette valeur peut être ajustée, si nécessaire, par le pilote, pour obtenir des valeurs du régime rotor NR qui sont conformes au manuel de vol ; et
- des moyens de calcul pour calculer automatiquement les ordres de commande qui sont appliqués audit doseur. Lesdits moyens de calcul calculent des ordres de commande qui permettent d'asservir, connaissant ledit régime NG mesuré, le régime du générateur de gaz dudit moteur sur une valeur de consigne NGcons dudit régime du générateur de gaz, qui dépend dudit régime NTL mesuré et de ladite valeur de consigne NTLcons déterminée.

Ce système de régulation connu présente certains inconvénients. En particulier, le régime NR de rotation du rotor en vol stationnaire est imposé par le choix préalable du régime optimal pour le vol en palier et reste toujours inférieur au régime NR de vol en palier.

La présente invention a pour objet de remédier à ces inconvénients et de perfectionner ce système de régulation dans le but d'obtenir une courbe régime/vitesse répondant à des critères particuliers de sécurité, de bruit et de performance, sans modifier les bases dudit système de régulation.

A cet effet, selon l'invention, ledit système de régulation du type comportant :

- au moins un doseur pour doser ledit carburant fourni au moteur, en fonction d'ordres de commande ;
- un premier moyen pour mesurer un régime NTL correspondant au régime de rotation de la turbine libre dudit moteur ;
- un deuxième moyen pour mesurer un régime NG correspondant au régime du générateur de gaz dudit moteur ;
- un dispositif pour déterminer une valeur de consigne NTLcons correspondant à la valeur de consigne du régime de rotation de la turbine libre du moteur ; et
- des moyens de calcul pour calculer automatiquement les ordres de commande qui sont appliqués audit doseur, lesdits moyens de calcul calculant des ordres de commande permettant d'asservir, connaissant ledit régime mesuré, le régime du générateur de gaz dudit moteur sur une valeur de consigne NGcons dudit régime du générateur de gaz, qui dépend dudit régime NTL mesuré et de ladite valeur de consigne NTLcons déterminée,

est remarquable en ce que ledit dispositif comporte au moins :

- un troisième moyen pour déterminer la position d'un palonnier dudit hélicoptère ; et
- un moyen de calcul auxiliaire qui calcule ladite valeur de consigne NTLcons en fonction de ladite position du palonnier.

Ainsi, grâce à la prise en compte de la position $D\delta$ du palonnier dans l'élaboration de ladite valeur de consigne NTLcons du régime de rotation de la turbine libre, on obtient, en raison notamment de la variation de la position $D\delta$ en fonction de la vitesse Vi de l'hélicoptère, une relation particulière et avantageuse entre le régime rotor NR (les régimes NTL et NR étant proportionnels, en raison du lien mécanique existant entre le moteur et la boîte de transmission principale de l'hélicoptère) et la vitesse Vi de l'hélicoptère, comme on le verra plus en détail ci-dessous.

La régulation du régime rotor ainsi obtenue, qui dépend donc de la vitesse, présente de nombreux avantages et permet notamment :

- autour du vol en stationnaire, d'augmenter le régime au maximum possible, afin :

  - de repousser la limite de masse à partir de laquelle il n'y a plus de zone d'insécurité en cas de panne du moteur (élargissement du diagramme hauteur/vitesse) ; et
  - d'augmenter l'efficacité du rotor arrière (la poussée du rotor arrière augmentant avec le régime de rotation) ;

- de limiter le régime du vol en palier, afin de réduire le bruit en survol ; et
- de ne pas trop réduire le régime en palier PMC (puissance maximale continue) pour ne pas trop réduire la vitesse maximale, surtout à basse altitude.

De plus, grâce à l'invention, on obtient également les avantages suivants :

- à faible masse, la puissance nécessaire au vol est plus faible, donc le couple rotor est également plus faible. Il s'ensuit un besoin d'anti-couple moindre et donc une commande de palonnier ($D\delta$) plus faible, ce qui entraîne un régime NR plus faible puisque le régime NR suit les variations de $D\delta$. Ainsi, l'hélicoptère sera encore moins bruyant, car le régime de ses rotors sera plus faible (le régime du rotor arrière étant proportionnel à celui du rotor principal) ; et
- en montée à très faible vitesse, lorsque la dérive verticale est très peu efficace, la commande de palonnier ($D\delta$) doit croître pour compenser la baisse progressive de la masse volumique de l'air avec l'altitude. Il s'ensuit une augmentation du régime NR, ce qui améliore le rendement du rotor (moindre consommation à isoperformances de montée). De même, lors de la mise en montée de l'hélicoptère, le pilote augmente le pas général du rotor principal pour augmenter la portance et donc la puissance et le couple. Le besoin d'anti-couple augmente en conséquence, ce qui produit aussi une augmentation du régime NR favorable aux performances.

Par ailleurs, la présente invention peut être mise en oeuvre de façon simple et à coût réduit, simplement en ajoutant ledit moyen de calcul auxiliaire et ledit troisième moyen pour déterminer la position du palonnier. De préférence, ce troisième moyen est un potentiomètre de recopie de la position du palonnier qui, généralement, existe déjà sur un hélicoptère, pour aider le pilote automatique. Ceci facilite davantage encore la réalisation de l'invention.

On notera que la présente invention est applicable à tout type de système de régulation, qu'il soit électromécanique, hydromécanique ou même numérique, et ceci aussi bien pour une régulation de type proportionnel (qui, comme on le sait, élabore une valeur de consigne NGcons du régime du générateur de gaz du moteur, qui est proportionnelle à l'écart entre ledit régime NTL et ladite valeur de consigne NTLcons) que pour une régulation de type intégral (dont la valeur de consigne NGcons évolue jusqu'à ce que le régime NTL soit égal à la valeur de consigne NTLcons).

Dans un mode de réalisation préféré, ledit moyen de calcul auxiliaire :

- calcule l'expression $A(D\delta)$ suivante :

$$A(D\delta) = aD\delta + b$$

dans laquelle :

  - $D\delta$ est la position du palonnier ; et
  - a et b sont des paramètres prédéterminés qui prennent des valeurs constantes sur des intervalles de valeurs successifs de $D\delta$ ; et

- utilise cette expression $A(D\delta)$ pour calculer ladite valeur de consigne NTLcons.

Bien entendu, dans le cadre de la présente invention, cette fonction A peut prendre d'autres formes et notamment toutes les autres formes possibles permettant, par exemple, de répondre à des besoins particuliers.

Par ailleurs, avantageusement, ledit dispositif comporte, de plus, au moins un moyen auxiliaire pour déterminer la valeur d'au moins un paramètre auxiliaire, et ledit moyen de calcul auxiliaire utilise la valeur dudit paramètre auxiliaire pour calculer ladite valeur de consigne NTLcons.

Dans ce cas, de préférence, ledit moyen de calcul auxiliaire utilise, comme paramètre auxiliaire, au moins l'un des paramètres suivants :

- l'altitude de l'hélicoptère ;
- la vitesse de l'hélicoptère ;
- la température ambiante ; et
- une valeur de consigne délivrée par un potentiomètre réglable.

La variation du régime rotor NR en fonction de la vitesse Vi de l'hélicoptère, obtenue grâce à l'invention, est particulièrement avantageuse en vol stationnaire, comme indiqué précédemment. En revanche, en vol en phase transitoire, peuvent apparaître deux problèmes, à savoir :

- un problème de sécurité, en cas de panne du moteur au décollage.
  A partir du vol en stationnaire, le pilote incline le rotor vers l'avant (commande cyclique en tangage) pour accélérer, en même temps qu'il agit sur le palonnier pour contrer le couple rotor et éviter ainsi une rotation indésirable de l'hélicoptère autour de son axe de lacet (sachant qu'à faible vitesse, la dérive verticale est inefficace). Dès que la vitesse augmente, l'efficacité de la dérive augmente et il faut réduire l'action sur le palonnier. Le régime NR diminue alors, puisqu'il est asservi au palonnier alors que la vitesse est encore faible. Si la panne survient à ce moment, le pilote doit réaliser la manoeuvre délicate d'atterrissage avec un régime proche du minimum de la courbe. Comme en plus le régime du rotor décroît très rapidement lors de la panne (50 tr/mn environ) quoi que fasse le pilote, l'hélicoptère peut se retrouver rapidement dans une situation très difficile par manque de portance ; et
- un problème de qualité de vol.
  Avec l'introduction de l'information de la position du palonnier dans la régulation moteur, les manoeuvres de lacet entraînent des variations du régime NR. Or, ces variations sont indésirables. En effet, lorsque le pilote agit sur le palonnier pour contrer une rafale de vent ou pour effectuer une rotation rapide, le régime NR ne doit pas varier, sous peine de provoquer des mouvements verticaux parasites de l'hélicoptère.

Pour remédier au moins à ces deux problèmes, de façon avantageuse, ledit moyen de calcul auxiliaire réalise un filtrage de la valeur de la position Dδ du palonnier, avec une fonction de transfert de $\dfrac{1}{1+\tau 1 p}$, $\tau 1$ étant un paramètre prédéterminé, avant d'utiliser cette valeur filtrée pour calculer ladite valeur de consigne NTLcons.

Ainsi, grâce à ce filtrage, on filtre également l'effet de la position Dδ du palonnier sur les variations du régime rotor NR, ce qui a pour conséquence:

- de retarder la réduction du régime NR lors de la mise de pied (Dδ) au décollage, pour assurer la sécurité près du sol, ceci permettant de remédier au problème de sécurité précité ; et
- de retarder et d'atténuer l'efficacité de la position Dδ dans la régulation pour assurer un comportement sain lors des manoeuvres de lacet, qui sont de courte durée, ce qui permet de remédier au problème de qualité de vol précité.

Par ailleurs, compte tenu des couplages entre la position Dδ et le régime NR, d'une part, et les régimes NR et NG, d'autre part, les mouvements de palonnier (Dδ) ont un impact sur le régime NG, et donc sur le couple délivré par le moteur. Les variations de couple induites par les commandes du palonnier risquent d'être trop brutales dans certaines configurations de vol et de pénaliser, en particulier, les ensembles mécaniques et structuraux.

Pour éviter un tel problème, avantageusement, ledit moyen de calcul auxiliaire réalise un filtrage de la valeur de la dérivée $\dfrac{d}{dt}$ (Dδ) de la position Dδ du palonnier, avec une fonction de transfert de $\dfrac{kp}{1+\tau 2p}$, k et $\tau 2$ étant des paramètres prédéterminés, avant d'utiliser cette valeur filtrée pour calculer ladite valeur de consigne NTLcons.

Grâce à ce dernier filtrage, on améliore la réponse de l'hélicoptère à un mouvement du palonnier. Ceci est particulièrement intéressant pour les configurations de vol où le moteur est proche d'une limite de puissance, couple ou régime NG, car il évite les dépassements de limitation pendant les manoeuvres.

Par ailleurs, dans un mode de réalisation préféré, lesdits moyens de calcul et ledit moyen de calcul auxiliaire sont regroupés dans un seul calculateur, de préférence du type FADEC ("Full Authority Digital Engine Computer"). Ceci rend particulièrement aisées l'introduction, sous forme de signaux électriques, des différents paramètres et notamment de la position Dδ, ainsi que la réalisation des différentes fonctions de calcul.

Les figures du dessin annexé feront bien comprendre comment l'invention peut être réalisée. Sur ces figures, des références identiques désignent des éléments semblables.

La figure 1 est le schéma synoptique d'un système de régulation conforme à l'invention.

Les figures 2 et 3 illustrent des graphiques permettant de bien mettre en évidence les effets obtenus grâce à l'invention sur la régulation du régime.

La figure 4 est un graphique illustrant une loi d'évolution particulière prenant en compte la position du palonnier de l'hélicoptère.

Les figures 5 et 6 illustrent schématiquement des modes de réalisation particuliers de filtres qui sont susceptibles d'être utilisés dans la mise en oeuvre de la présente invention.

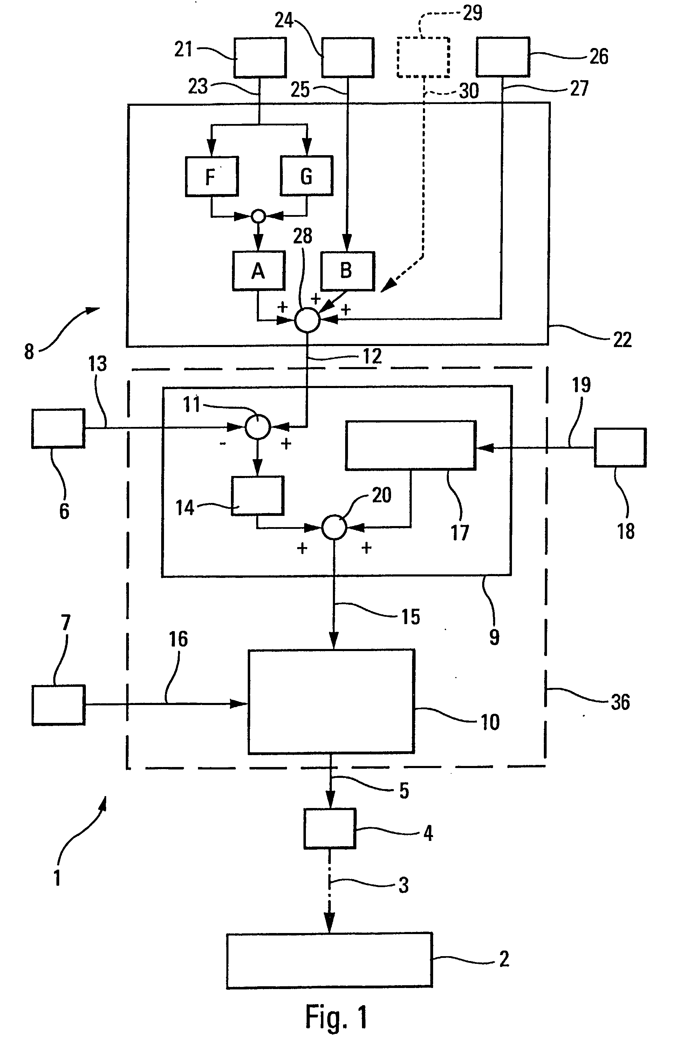

Le système 1 conforme à l'invention et représenté schématiquement sur la figure 1 est destiné à réguler le régime d'au moins un moteur 2 d'un hélicoptère (monomoteur ou multimoteur) et donc de réguler le régime du rotor principal d'avance et de sustentation de cet hélicoptère, qui est entraîné par ce moteur 2.

On sait qu'un tel système de régulation 1 est destiné à doser automatiquement le carburant qui est fourni au moteur 2, comme illustré par une liaison 3 en traits mixtes sur la figure 1, et qui intervient notamment lorsque la commande de débit (manette de débit) non représentée est amenée par le pilote sur une position "vol".

De façon connue, ledit système de régulation 1 comporte, comme représenté sur la figure 1 :

- au moins un doseur 4, de type usuel, pour doser le carburant qui est fourni au moteur 2, en fonction d'ordres de commande reçus par une liaison 5 ;
- un premier moyen 6, de type usuel, pour mesurer un régime NTL correspondant au régime de rotation de la turbine libre dudit moteur 2 ;
- un deuxième moyen 7, de type usuel, pour mesurer un régime NG correspondant au régime du générateur de gaz dudit moteur 2 ;
- un dispositif 8 pour déterminer une valeur de consigne NTLcons correspondant à la valeur de consigne du régime de rotation de la turbine libre du moteur 2 ; et
- des moyens de calcul 9 et 10 pour calculer automatiquement les ordres de commande qui sont appliqués audit doseur 4.

Lesdits moyens de calcul 9 et 10 calculent des ordres de commande permettant d'asservir, connaissant ledit régime NG mesuré, le régime du générateur de gaz dudit moteur sur une valeur de consigne NGcons dudit régime du générateur de gaz, qui dépend dudit régime NTL mesuré et de ladite valeur de consigne NTLcons déterminée.

A cet effet :

- ledit moyen de calcul 9 détermine ladite valeur de consigne NGcons du régime du générateur de gaz du moteur. Pour ce faire, dans le mode de réalisation de la figure 1, il comporte notamment un différentiateur 11 qui calcule la différence entre la valeur de consigne NTLcons reçue par une liaison 12 du dispositif 8 et le régime NTL reçu par une liaison 13 du moyen de mesure 6, ainsi qu'un multiplicateur 14 qui multiplie cette différence par un paramètre Kp prédéterminé ; et
- ledit moyen de calcul 10 détermine les ordres de commande du doseur 4, à partir de la valeur de consigne NGcons reçue du moyen de calcul 9 par une liaison 15 et du régime NG reçu par une liaison 16 du moyen de mesure 7.

De plus, pour améliorer le temps de réponse, ledit moyen de calcul 9 comporte également un élément de calcul 17 qui met en oeuvre une loi d'anticipation C connue, utilisant la valeur Dθ du pas collectif, mesurée par un moyen 18 de type usuel et reçue par une liaison 19. Un sommateur 20 ajoute les résultats [C(Dθ)] issus du traitement mis en oeuvre par cet élément de calcul 17 aux résultats issus du multiplicateur 14.

Pour perfectionner ce système de régulation 1, selon l'invention, ledit dispositif 8 comporte au moins :

- un troisième moyen 21 pour déterminer la position Dδ d'un palonnier non représenté dudit hélicoptère ; et
- un moyen de calcul auxiliaire 22 précisé ci-dessous qui calcule ladite valeur de consigne NTLcons (qui est transmise au moyen de calcul 9 par la liaison 12) en fonction de la position Dδ dudit palonnier.

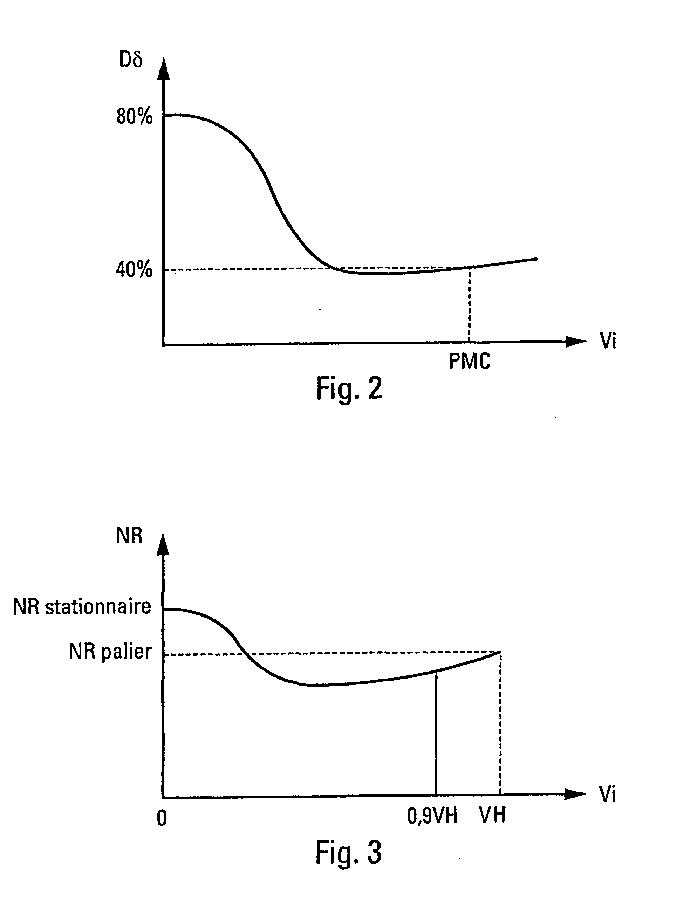

Ainsi, grâce à la prise en compte de la position Dδ du palonnier dans l'élaboration de la valeur de consigne NTLcons du régime de rotation de la turbine libre, on obtient, en raison notamment de la variation [Dδ = f1 (Vi)] de la position Dδ en fonction de la vitesse Vi de l'hélicoptère qui est représentée sur la figure 2 où "PMC" représente la "puissance maximale continue", une relation particulière et avantageuse [NR=f2(Vi)] entre le régime rotor NR du rotor principal d'avance et de sustentation de l'hélicoptère et la vitesse Vi de l'hélicoptère, qui est représentée sur la figure 3.

Sur cette figure 3 :

- "NR stationnaire" représente le régime rotor en vol stationnaire ;
- "NR palier" représente le régime rotor en vol en palier ; et
- "VH" représente la vitesse maximale de l'hélicoptère, correspondant à la PMC.

Grâce à cette relation particulière [NR=f2(Vi)], la régulation du régime rotor R (dépendant de la vitesse Vi) obtenu ainsi présente de nombreux avantages et permet notamment :

- autour du vol en stationnaire, d'augmenter le régime au maximum possible, afin :

  . de repousser la limite de masse à partir de laquelle il n'y a plus de zone d'insécurité, en cas de panne du moteur (élargissement du diagramme hauteur/vitesse) ; et
  . d'augmenter l'efficacité du rotor arrière (la poussée du rotor arrière augmentant avec le régime de rotation) ;

- de limiter le régime du vol en palier, afin de réduire le bruit en survol ; et
- de ne pas trop réduire le régime en palier PMC pour ne pas trop réduire la vitesse maximale, surtout à basse altitude.

Par ailleurs, la présente invention peut être mise en oeuvre de façon simple et à coût réduit, simplement en ajoutant ledit moyen de calcul auxiliaire 22 et ledit troisième moyen 21 pour déterminer la position du palonnier.

Dans un mode de réalisation préféré, ce troisième moyen 21 est un potentiomètre de recopie de la position du palonnier qui, généralement, existe déjà sur un hélicoptère et est associé au pilote automatique. Dans ce cas, seul le moyen de calcul auxiliaire 22 doit être spécialement prévu, dans un mode de réalisation de base.

On notera que la présente invention est applicable à tout type de système de régulation, qu'il soit électromécanique, hydromécanique ou même numérique, et ceci aussi bien pour une régulation de type proportionnel (qui, comme on le sait, élabore une valeur de consigne NGcons du régime du générateur de gaz du moteur 2, qui est proportionnelle à l'écart entre ledit régime NTL et ladite valeur de consigne NTLcons) que pour une régulation de type intégral (dont la valeur de consigne NGcons évolue jusqu'à ce que le régime NTL soit égal à la valeur de consigne NTLcons).

Selon l'invention, la position $D\delta$ mesurée par le moyen 21 et transmise par une liaison 23 est soumise, éventuellement après filtrage (F et G) comme précisé ci-dessous, à une loi A de manière à obtenir une courbe $A(D\delta)$.

Dans un mode de réalisation préféré, la courbe $A(D\delta)$ est une succession de segments de droite A1 à A4 et vérifie la relation $A(D\delta) = a\,D\delta + b$, dans laquelle a et b sont des constantes prédéterminées qui varient sur des secteurs S1 à S4, de secteur à secteur.

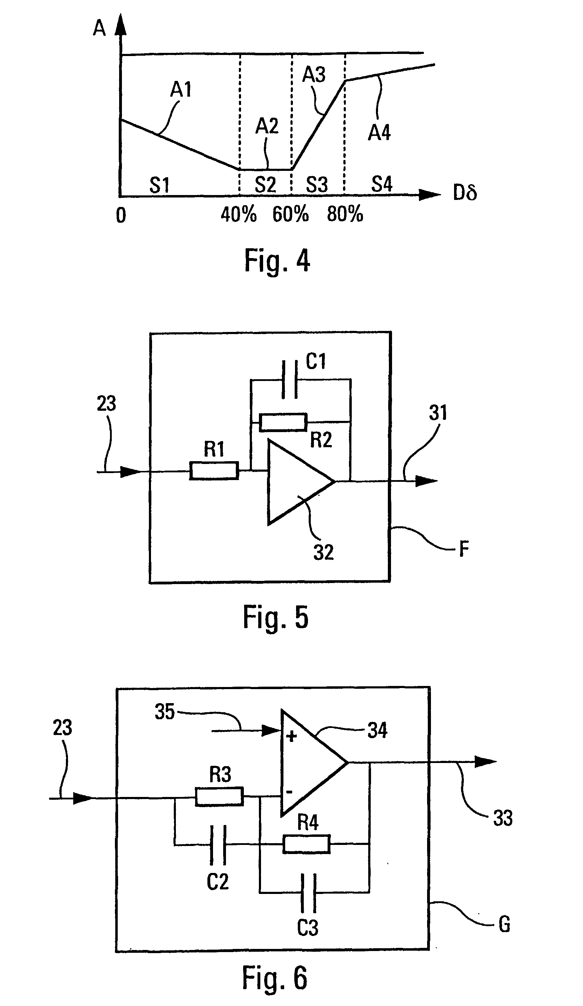

Dans le mode de réalisation représenté sur la figure 4 :

- le secteur S1 est compris entre 0 et 40% de $D\delta$ ;
- le secteur S2 est compris entre 40% et 60% de $D\delta$ ;
- le secteur S3 est compris entre 60% et 80% de $D\delta$ ; et
- le secteur S4 est défini au-delà de 80% de $D\delta$.

Par ailleurs, dans un mode de réalisation particulier :

- l'élément de calcul 17 du moyen de calcul 9 (destiné à calculer la valeur de consigne NGcons) calcule l'expression $A0(D\delta)$ suivante :

$$A0(D\delta) = \frac{1}{Kp}\,[aD\delta + b]$$

dans laquelle :

- $D\delta$ est la position du palonnier ;

- $Kp$ est un coefficient prédéterminé utilisé dans le multiplicateur 14 ; et
- a et b sont des paramètres prédéterminés qui prennent des valeurs constantes sur des intervalles de valeurs successifs de $D\delta$ ; et

- ledit moyen de calcul 9 utilise cette expression $A0(D\delta)$ pour calculer ladite valeur de consigne NGcons.

Dans le mode de réalisation particulier de la figure 1, le dispositif 8 comporte de plus :

- un moyen 24, de type usuel, pour mesurer l'altitude $Zp$ de l'hélicoptère. Cette valeur est transmise par une liaison 25 au moyen de calcul auxiliaire 22 qui la soumet à une loi B. On notera que la loi $B(Zp)$ peut être utilisée pour translater la courbe de la figure 4 vers le haut quand l'altitude augmente ; et
- un moyen 26 pour engendrer une valeur constante "TrimNTLcons" de la valeur de consigne du régime NTL, qui est transmise au moyen de calcul auxiliaire 22 par une liaison 27. De préférence, ce moyen 26 correspond à un potentiomètre qui est réglable par le pilote.

Par ailleurs, le moyen de calcul auxiliaire 22 comporte également un sommateur 28 pour permettre la prise en compte simultanée de tous les paramètres précités.

Dans ce cas, la valeur de consigne NTLcons vérifie la relation suivante :

$$NTLcons = A(D\delta) + B(Zp) + TrimNTLcons.$$

D'autres paramètres peuvent bien entendu également être utilisés pour le calcul de NTLcons, en particulier la vitesse $Vi$ de l'hélicoptère et la température ambiante. Ces paramètres peuvent être mesurés ou déterminés par des moyens 29 optionnels reliés par une liaison 30 au moyen du calcul auxiliaire 22. L'introduction de ces paramètres supplémentaires nécessite une interface mécanique ou électrique (suivant que la régulation est électromécanique, hydromécanique, analogique ou numérique). Les lois supplémentaires peuvent être réalisées à l'intérieur du moyen de calcul auxiliaire 22 ou bien être réalisées par des interfaces extérieures.

De ce qui précède, on en déduit que la valeur de consigne NGcons calculée par le moyen de calcul 9 s'écrit, dans le cas d'une "régulation proportionnelle" :

$$NGcons = C(D\theta) + Kp[NTLcons - NTL] \qquad (1)$$

Comme le régime NG doit être asservi sur cette valeur de consigne NGcons, on a :

$$NG = C(D\theta) + Kp[NTLcons - NTL] \qquad (2)$$

NTLcons dépendant notamment de $D\delta$, de $Vi$ et de $Zp$ [NTLcons = f3($D\delta$, $Vi$, $Zp$)], et $C(D\theta)$ dépendant de $D\theta$ [$C(D\theta) = f4(D\theta)$], on a de plus :

$$NG = f5(D\theta, D\delta, Vi, Zp) - KpNTL \qquad (3)$$

Comme de plus NTL et NR (régime rotor) sont proportionnels, car le moteur 2 et la boîte de transmission principale de l'hélicoptère sont mécaniquement liés, l'expression (3) s'écrit :

$$NG = f5(D\theta, D\delta, Vi, Zp) - Kp1NR.$$

Compte tenu des courbes d'évolution de la puissance nécessaire au vol et du pas collectif en fonction de la vitesse d'avancement, on obtient une courbe NR=f2(Vi) dont l'allure correspond au besoin précité. En particulier, le régime en stationnaire est plus élevé qu'en palier.

Avec un choix judicieux de la fonction f5(D$\theta$, Zp, Vi, D$\delta$), il est possible d'ajuster cette courbe [NR=f2(Vi)] pour la faire passer par des points caractéristiques appropriés.

Cette loi d'évolution répond aux besoins précités et présente, en outre, des avantages supplémentaires, à savoir :

- à faible masse, la puissance nécessaire au vol est plus faible, donc le couple rotor est également plus faible. Il s'ensuit un besoin d'anti-couple moindre et donc une commande palonnier D$\delta$ plus faible, ce qui entraîne un régime NR plus faible puisque le régime NR suit les variations de D$\delta$ [la courbe NR=f2(Vi) a la même allure que la courbe D$\delta$=f1(Vi)]. Par conséquent, à faible masse, l'hélicoptère sera encore moins bruyant car le régime de ses rotors sera plus faible (le régime du rotor arrière étant proportionnel à celui du rotor principal) ;
- en montée à très faible vitesse, lorsque la dérive verticale est très peu efficace, la commande palonnier D$\delta$ doit croître pour compenser la baisse progressive de la masse volumique de l'air avec l'altitude. Il s'ensuit une augmentation du régime NR, ce qui améliore le rendement du rotor (moindre consommation à iso-performances de montée). De même, lors de la mise en montée de l'hélicoptère, le pilote augmente le pas général du rotor principal pour augmenter la portance et donc la puissance et le couple. Le besoin d'anti-couple augmente en conséquence, ce qui produit aussi une augmentation du régime NR favorable aux performances.

On notera que, dans le cas d'une "régulation intégrale", la solution est la même. En introduisant le paramètre D$\delta$ dans l'élaboration de la consigne NTLcons, on obtient un régime NR qui suit la même évolution que sa consigne (principe de la régulation intégrale), c'est-à-dire une courbe de même allure que la courbe représentée sur la figure 3.

L'évolution du régime rotor NR en fonction de la vitesse Vi de l'hélicoptère, obtenue grâce à l'invention, est particulièrement avantageuse en vol stationnaire, comme indiqué précédemment. En revanche, en vol en phase transitoire, peuvent apparaître deux problèmes, à savoir :

- un problème de sécurité, en cas de panne moteur au décollage.
  A partir du vol en stationnaire, le pilote incline le rotor vers l'avant (commande cyclique en tangage) pour accélérer, en même temps qu'il agit sur le palonnier pour contrer le couple rotor et éviter ainsi une rotation indésirable de l'hélicoptère autour de son axe de lacet (sachant qu'à faible vitesse, la dérive verticale est inefficace). Dès que la vitesse augmente, l'efficacité de la dérive augmente et il faut réduire l'action sur le palonnier. Le régime NR diminue, puisqu'il est asservi au palonnier alors que la vitesse est encore faible. Si la panne survient à ce moment, le pilote doit réaliser la manoeuvre délicate d'atterrissage avec un régime proche du minimum de la courbe. Comme en plus le rotor perd très rapidement des tours pendant la panne, quoi que fasse le pilote, l'hélicoptère peut se retrouver rapidement en situation difficile par manque de portance ; et
- un problème de qualité de vol.
  Avec l'introduction de l'information de la position D$\delta$ du palonnier dans la régulation moteur, les manoeuvres de lacet entraînent des variations du régime NR. Or, ces variations sont indésirables. En effet, lorsque le pilote agit sur le palonnier pour contrer une rafale de vent ou pour effectuer une rotation rapide, le régime NR ne doit pas varier, sous peine de provoquer des mouvements verticaux parasites de l'hélicoptère.

Pour remédier à ces problèmes, de façon avantageuse, ledit moyen de calcul auxiliaire 22 réalise un filtrage F de la valeur de la position D$\delta$ du palonnier, avec une fonction de transfert de $\frac{1}{1 + \tau 1 p}$, $\tau 1$ étant un paramètre prédéterminé, avant d'utiliser cette valeur filtrée pour calculer ladite valeur de consigne NTLcons.

Grâce à ce filtrage du 1er ordre, dans l'élaboration de la consigne NTLcons, le terme relatif à D$\delta$ comportera un élément de la forme :

$$F(D\delta) = \frac{1}{1 + \tau 1 p} D\delta$$

Il permet de retarder la pleine efficacité du palonnier tout en évitant les discontinuités de la réponse moteur. Une approche expérimentale en vol permet de déterminer la valeur optimale de ce retard $\tau 1$ (6s par exemple). Cette valeur peut être préalablement approchée par simulation.

Ainsi, grâce à ce filtrage F, on filtre également l'effet de la position D$\delta$ sur les variations du régime rotor NR, ce qui a pour conséquence :

- de retarder la réduction du régime NR lors de la mise de pied (D$\delta$) pour assurer la sécurité près du sol, et donc de remédier au problème de sécurité précité ; et
- de retarder et d'atténuer l'efficacité de la position D$\delta$ dans la régulation pour assurer un comportement sain lors des manoeuvres de lacet, qui sont de courte durée, ce qui permet de remédier au problème de qualité de vol précité.

Dans un mode de réalisation particulier, le filtre F qui est relié à des liaisons 23 et 31 peut comporter le montage usuel représenté sur la figure 5, qui comprend un amplificateur opérationnel 32, une capacité C1 et des résistances R1 et R2 (ou tous moyens équivalents). Pour ce filtre F, la fonction de transfert vaut :

$$\frac{R2}{R1}\left(\frac{1}{1+R2C1p}\right)$$

Par ailleurs, compte tenu des couplages entre la position D$\delta$ et le régime NR d'une part, et les régimes NR et NG d'autre part, les mouvements de palonnier D$\delta$ ont un impact sur le régime NG, et donc sur le couple délivré par le moteur 2. Les variations de couple induites par les commandes du palonnier risquent d'être trop brutales dans certaines configurations de vol et de pénaliser, en particulier, les ensembles mécaniques et structuraux.

Pour prendre en compte les variations de D$\delta$, il faut introduire dans l'élaboration de la consigne NTLcons un terme proportionnel à $\frac{d}{dt}$d (D$\delta$) de signe négatif, filtré suffisamment pour éliminer le bruit. Avec un filtrage G du 1er ordre comparable à celui du filtre F précité, ce terme sera de la forme :

$$G(D\delta) = k\,\frac{p}{1+\tau 2p}\,D\delta$$

avec un gain k et une constante $\tau 2$ adaptés pour maintenir le couple constant pendant la manoeuvre.

Comme pour le filtre F précédent, les valeurs convenables des paramètres k et $\tau 2$ sont déterminés par essais en vol (ils peuvent être préalablement estimés par une approche théorique).

Par conséquent, selon l'invention, ledit moyen de calcul auxiliaire 22 réalise un filtrage G de la valeur de la position D$\delta$ du palonnier, avec une fonction de transfert de $\frac{kp}{1+\tau 2p}$, avant d'utiliser cette valeur filtrée pour calculer ladite valeur de consigne NTLcons.

Grâce à ce filtrage G, on améliore la réponse de l'aéronef à un mouvement du palonnier. Ceci est particulièrement intéressant pour les configurations de vol où le moteur est proche d'une limite de puissance, couple ou régime NG, car il évite les dépassements de limitation pendant les manoeuvres.

Dans un mode de réalisation particulier, le filtre G qui est relié à des liaisons 23 et 33 peut comporter le montage usuel représenté sur la figure 6, qui comprend un amplificateur opérationnel 34, dont l'entrée non inverseuse 35 peut être reliée à un moyen de mesure non représenté d'un paramètre particulier relatif au régime rotor NR, des capacités C2 et C3 et des résistances R3 et R4 (ou tous moyens équivalents).

Pour ce filtre G, la fonction de transfert vaut :

$$\frac{R4}{R3}\left(\frac{1+R3C2p}{1+R4C3p}\right)$$

Par ailleurs, dans un mode de réalisation préféré [comme représenté partiellement pour le moyen de calcul 9 (régulateur NTL) et le moyen de calcul 10 (régulateur NG) qui sont regroupés en une unité 36 sur la figure 1], lesdits moyens de calcul 9 et 10 et ledit moyen de calcul auxiliaire 22 sont regroupés dans un seul et même calculateur, de préférence du type FADEC ("Full Authority Digital Engine Computer"). Ceci rend particulièrement aisées l'introduction, sous forme de signaux électriques, des différents paramètres et notamment de la position D$\delta$, ainsi que la réalisation des différentes fonctions de calcul.

## Revendications

1. Système de régulation du régime d'au moins un moteur (2) d'un hélicoptère, ledit système de régulation (1) étant susceptible de doser automatiquement le carburant fourni audit moteur (2) et comportant :

   - au moins un doseur (4) pour doser ledit carburant fourni au moteur (2), en fonction d'ordres de commande ;
   - un premier moyen (6) pour mesurer un régime NTL correspondant au régime de rotation de la turbine libre dudit moteur (2) ;
   - un deuxième moyen (7) pour mesurer un régime NG correspondant au régime du générateur de gaz dudit moteur (2) ;

- un dispositif (8) pour déterminer une valeur de consigne NTLcons correspondant à la valeur de consigne du régime de rotation de la turbine libre du moteur (2) ; et
- des moyens de calcul (9, 10) pour calculer automatiquement les ordres de commande qui sont appliqués audit doseur (4), lesdits moyens de calcul (9, 10) calculant des ordres de commande permettant d'asservir, connaissant ledit régime NG mesuré, le régime du générateur de gaz dudit moteur sur une valeur de consigne NGcons dudit régime du générateur de gaz, qui dépend dudit régime NTL mesuré et de ladite valeur de consigne NTLcons déterminée,

**caractérisé en ce que** ledit dispositif (8) comporte au moins :

- un troisième moyen (21) pour déterminer la position (Dδ) d'un palonnier dudit hélicoptère ; et
- un moyen de calcul auxiliaire (22) qui calcule ladite valeur de consigne NTLcons en fonction de ladite position (Dδ) du palonnier.

2. Système de régulation selon la revendication 1, **caractérisé en ce que** lesdits moyens de calcul (9, 10) calculent les ordres de commande pour réaliser une régulation de type proportionnel.

3. Système de régulation selon la revendication 1, **caractérisé en ce que** lesdits moyens de calcul (9, 10) calculent les ordres de commande pour réaliser une régulation de type intégral.

4. Système de régulation selon l'une quelconque des revendications 1 à 3, **caractérisé en ce que** ledit troisième moyen (21) est un potentiomètre de recopie de la position (Dδ) du palonnier.

5. Système de régulation selon l'une quelconque des revendications 1 à 4, **caractérisé en ce que** ledit moyen de calcul auxiliaire (22) :

- calcule l'expression A(Dδ) suivante :

$$A(D\delta) = aD\delta + b$$

dans laquelle :

- Dδ est la position du palonnier ; et
- a et b sont des paramètres prédéterminés qui prennent des valeurs constantes sur des intervalles de valeurs (S1, S2, S3, S4) successifs de Dδ ; et

- utilise cette expression A(Dδ) pour calculer ladite valeur de consigne NTLcons.

6. Système de régulation selon l'une quelconque des revendications 1 à 5, **caractérisé en ce que** :

- un élément de calcul (17) du moyen de calcul (9) destiné à calculer la valeur de consigne NGcons calcule l'expression AO(Dδ) suivante :

$$A0(D\delta) = \frac{1}{Kp} [aD\delta + b]$$

dans laquelle :

- Dδ est la position du palonnier ;
- Kp est un coefficient prédéterminé ; et
- a et b sont des paramètres prédéterminés qui prennent des valeurs constantes sur des intervalles de valeurs successifs de Dδ ; et

- ledit moyen de calcul (9) utilise cette expression A0(Dδ) pour calculer ladite valeur de consigne NGcons.

7. Système de régulation selon l'une quelconque des revendications précédentes, **caractérisé en ce que** ledit dispositif (8) comporte, de plus, au moins un moyen auxiliaire (24, 26, 29) pour déterminer la valeur d'au moins un paramètre auxiliaire, et **en ce que** ledit moyen de calcul auxiliaire (22) utilise ladite valeur du paramètre auxiliaire pour calculer ladite valeur de consigne NTLcons.

8. Système de régulation selon la revendication 7, **caractérisé en ce que** ledit moyen de calcul auxiliaire (22) utilise, comme paramètre auxiliaire, au moins l'un des paramètres suivants :

- l'altitude de l'hélicoptère ;
- la vitesse de l'hélicoptère ;
- la température ambiante ; et
- une valeur de consigne délivrée par un potentiomètre réglable.

9. Système de régulation selon l'une quelconque des revendications précédentes, **caractérisé en ce que** ledit moyen de calcul auxiliaire (22) réalise un filtrage (F) de la valeur de la position (Dδ) du palonnier, avec une fonction de transfert de $\frac{1}{1 + \tau 1p}$ τ1 étant un paramètre prédéterminé, avant d'utiliser cette valeur filtrée pour calculer ladite valeur de consigne NTLcons.

10. Système de régulation selon l'une quelconque des revendications précédentes,
**caractérisé en ce que** ledit moyen de calcul auxiliaire (22) réalise un filtrage (G) de la dérivée de la position (Dδ) du palonnier, avec une fonction de transfert de $\frac{kp}{1 + \tau 2p}$, k et τ2 étant des paramètres prédéterminés, avant d'utiliser cette valeur filtrée pour calculer ladite valeur de consigne NTLcons.

11. Système de régulation selon l'une quelconque des revendications précédentes,
**caractérisé en ce que** lesdits moyens de calcul (9, 10) et ledit moyen de calcul auxiliaire (22) sont regroupés dans un seul calculateur.

**Patentansprüche**

1. Geschwindigkeitsregelsystem für mindestens einen Motor (2) eines Hubschraubers, welches Regelsystem (1) geeignet ist, den Treibstoff, der diesem Motor (2) zugeführt, automatisch zu dosieren, und das umfasst:

   - mindestens eine Dosiereinrichtung (4) zur dosierten Zuführung des Treibstoffs zum Motor (2), abhängig von Steuerbefehlen;
   - ein erstes Mittel (6) zum Messen eines NTL-Bereichs, der dem Drehbereich der freien Turbine des Motors (2) entspricht;
   - ein zweites Mittel (7) zum Messen eines NG-Bereichs, der dem Drehbereich des Gasgenerators des Motors (2) entspricht;
   - eine Vorrichtung (8) zur Bestimmung eines NTLcons-Sollwerts, der dem Sollwert des Drehbereichs der freien Turbine des Motors (2) entspricht; und
   - Berechnungsmittel (9, 10) zur automatischen Berechnung der Steuerbefehle, die an die Dosiereinrichtung (4) angelegt werden, welche Berechnungsmittel (9, 10), die Steuerbefehle berechnen, es ermöglichen, den Drehbereich des Gasgenerators des Motors, nachdem sie den gemessenen NG-Drehbereich kennen, an einem Sollwert Ngcons des Drehbereichs des Gasgenerators auszurichten, der von dem gemessenen NTL-Drehbereich und dem bestimmten Sollwert NTLcons abhängt,

   **dadurch gekennzeichnet, dass** die Vorrichtung (8) mindestens umfasst:

   - ein drittes Mittel (21) zur Bestimmung der Position (Dδ) eines Steuerknüppels des Hubschraubers; und
   - ein Hilfsberechnungsmittel (22), das den genannten Sollwert NTLcons abhängig von der Position (Dδ) des Steuerknüppels berechnet.

2. Regelsystem nach Anspruch 1,
**dadurch gekennzeichnet, dass** die Mittel zum Berechnen (9, 10) die Steuerbefehle berechnen, um eine Proportional-Regelung zu schaffen.

3. Regelsystem nach Anspruch 1,
**dadurch gekennzeichnet, dass** die Mittel zum Berechnen (9, 10) die Steuerbefehle berechnen, um eine Integral-Regelung zu schaffen.

4. Regelsystem nach einem der Ansprüche 1 bis 3,
**dadurch gekennzeichnet, dass** das dritte Mittel (21) ein Rückkopplungs-Potentiometer der Position (D8) des Steuerknüppels ist.

5. Regelsystem nach einem der Ansprüche 1 bis 4,
**dadurch gekennzeichnet, dass** das Hilfsberechnungsmittel (22)

   - folgenden Ausdruck A(Dδ) berechnet:

   $$A(D\delta) = aD\delta + b,$$

   in dem :

   - Dδ die Position des Steuerknüppels ist; und
   - a und b vorbestimmte Parameter sind, die konstante Werte in aufeinanderfolgenden Intervallwerten (S1, S2, S3, S4) von Dδ annehmen; und

   - diesen Ausdruck A(Dδ) zur Berechnung des genannten Sollwerts NTLcons verwendet.

6. Regelsystem nach einem der Ansprüche 1 bis 5,
**dadurch gekennzeichnet, dass**

   - ein Berechnungselement (17) des Berechnungsmittels (9), das zur Berechnung des Sollwerts NGcons bestimmt ist, folgenden Ausdruck A0(Dδ) berechnet:

   $$A0(D\delta) = \frac{1}{Kp}\,[aD\delta + b]\,,$$

   in dem:

   - Dδ die Position des Steuerknüppels ist;
   - Kp ein vorbestimmter Koeffizient ist; und
   - a und b vorbestimmte Parameter sind, die konstante Werte in aufeinanderfolgenden Intervallwerten von Dδ annehmen; und

   - das Berechnungsmittel (9) diesen Ausdruck AO(Dδ) zur Berechnung des Sollwerts NGcons nutzt.

**7.** Regelsystem nach einem der vorstehenden Ansprüche,
**dadurch gekennzeichnet, dass** die Vorrichtung (8) ferner mindestens ein Hilfsmittel (24, 26, 29) zur Bestimmung des Wertes mindestens eines Hilfsparameters umfasst, sowie **dadurch**, dass das Hilfsberechnungsmittel (22) diesen Wert des Hilfsparameters zur Berechnung des Sollwerts NTLcons nutzt.

**8.** Regelsystem nach Anspruch 7,
**dadurch gekennzeichnet, dass** das Hilfsberechnungsmittel (22) als Hilfsparameter mindestens einen der folgenden Parameter verwendet:

- die Höhe des Hubschraubers;
- die Geschwindigkeit des Hubschraubers;
- die Umgebungstemperatur; und
- einen von einem regulierbaren Potentiometer gelieferten Sollwert.

**9.** Regelsystem nach einem der vorstehenden Ansprüche,
**dadurch gekennzeichnet, dass** das Hilfsberechnungsmittel (22) eine Filterung (F) des Wertes der Position (Dδ) des Steuerknüppels vornimmt, mit einer Übergangsfunktion

$$\frac{1}{1 + \tau 1p},$$

wobei τ1 ein vorbestimmter Parameter ist, bevor dieser gefilterte Wert zur Berechnung des Sollwerts NTLcons verwendet wird.

**10.** Regelsystem nach einem der vorstehenden Ansprüche,
**dadurch gekennzeichnet, dass** das Hilfsberechnungsmittel (22) eine Filterung (G) des Differenzialquotienten der Position (Dδ) des Steuerknüppels vornimmt, mit einer Übergangsfunktion

$$\frac{kp}{1 + \tau 2p},$$

wobei k und τ2 vorbestimmte Parameter sind, bevor dieser gefilterte Wert zur Berechnung des Sollwerts NTLcons verwendet wird.

**11.** Regelsystem nach einem der vorstehenden Ansprüche,
**dadurch gekennzeichnet, dass** die Berechnungsmittel (9, 10) und das Hilfsberechnungsmittel (22) in einem einzigen Rechner zusammengefasst sind.

**Claims**

**1.** Regulating system for regulating the speed of at least one engine (2) of a helicopter, the said regulating system (1) being able to automatically meter the fuel fed to the said engine (2) and comprising:

- at least one metering device (4) for metering the said fuel fed to the engine (2), as a function of control commands;
- a first means (6) for measuring an NTL speed corresponding to the rotational speed of the free turbine of the said engine (2);
- a second means (7) for measuring an NG speed corresponding to the speed of the gas generator of the said engine (2);
- a device (8) for determining a desired value NTLcons corresponding to the desired value of the rotational speed of the free turbine of the engine (2); and
- computation means (9, 10) for automatically computing the control commands which are applied to the said metering valve (4), the said computation means (9, 10) computing control commands making it possible to slave, knowing the said measured NG speed, the speed of the gas generator of the said engine to a desired value NGcons of the said speed of the gas generator, which depends on the said measured NTL speed and on the said determined desired value NTLcons,

**characterised in that** the said device (8) comprises at least:

- a third means (21) for determining the position (Dδ) of a rudder bar of the said helicopter; and
- an auxiliary computation means (22) which computes the said desired value NTLcons as a function of the said position (Dδ) of the rudder bar.

**2.** Regulating system according to Claim 1,
**characterised in that** the said computation means (9, 10) compute the control commands so as to carry out regulation of proportional type.

**3.** Regulating system according to Claim 1,
**characterised in that** the said computation means (9, 10) compute the control commands so as to carry out regulation of integral type.

**4.** Regulating system according to any one of Claims 1 to 3,
**characterised in that** the said third means (21) is a potentiometer for feedback of the position (Dδ) of the rudder bar.

5. Regulating system according to any one of Claims 1 to 4, **characterised in that** the said auxiliary computation means (22):

- computes the following expression A(Dδ) :

$$A(Dδ) = aDδ + b$$

in which:

- Dδ is the position of the rudder bar; and
- a and b are predetermined parameters which take constant values over successive intervals of values (S1, S2, S3, S4) of Dδ; and

- uses this expression A(Dδ) to compute the said desired value NTLcons.

6. Regulating system according to any one of Claims 1 to 5, **characterised in that**:

- a computation element (17) of the computation means (9) intended for computing the desired value NGcons computes the following expression A0(Db) :

$$A0(Dδ) = \frac{1}{Kp} [aDδ + b]$$

in which:

- Dδ is the position of the rudder bar;
- Kp is a predetermined coefficient; and
- a and b are predetermined parameters which take constant values over successive intervals of values of Dδ; and

- the said computation means (9) uses this expression A0(Dδ) to compute the said desired value NGcons.

7. Regulating system according to any one of the preceding claims, **characterised in that** the said device (8) further comprises at least one auxiliary means (24, 26, 29) for determining the value of at least one auxiliary parameter, and **in that** the said auxiliary computation means (22) uses the said value of the auxiliary parameter to compute the said desired value NTLcons.

8. Regulating system according to Claim 7, **characterised in that** the said auxiliary computation means (22) uses, as auxiliary parameter, at least one of the following parameters:

- the altitude of the helicopter;
- the speed of the helicopter;
- the ambient temperature; and
- a desired value delivered by an adjustable potentiometer.

9. Regulating system according to any one of the preceding claims, **characterised in that** the said auxiliary computation means (22) carries out a filtering (F) of the value of the position (Dδ) of the rudder bar, with a transfer function $\frac{1}{1 + τ1p}$, τ1 being a predetermined parameter, before using this filtered value to compute the said desired value NTLcons.

10. Regulating system according to any one of the preceding claims, **characterised in that** the said auxiliary computation means (22) carries out a filtering (G) of the derivative of the position (Dδ) of the rudder bar, with a transfer function $\frac{kp}{1 + τ2p}$, k and τ2 being predetermined parameters, before using this filtered value to compute the said desired value NTLcons.

11. Regulating system according to any one of the preceding claims, **characterised in that** the said computation means (9, 10) and the said auxiliary computation means (22) are grouped together within a single computer.

Fig. 1

Fig. 2

Fig. 3

Fig. 4

Fig. 5

Fig. 6